# EUROPEAN PATENT APPLICATION

(11) **EP 4 806 670 A1**
(43) Date of publication of application: **16.09.2026**
(21) Application number: 26153458.0
(22) Date of filing: 22.01.2026
(51) Int. Cl.: B60C 23/04

(54) **VEHICLE WHEEL PROVIDED WITH PRESSURE SENSOR**

(30) Priority: 13.03.2025 IT 202500005138
(71) Applicant: COMETTO S.p.A., 12011 Borgo San Dalmazzo (IT)
(72) Inventor: LIPPI, Fabrizio, 12011 BORGO SAN DALMAZZO (CN) (IT); GIORDANO, Gabriele, 12011 BORGO SAN DALMAZZO (CN) (IT); D'AGOSTINO, Willian, 12011 BORGO SAN DALMAZZO (CN) (IT); FICKERS, Alexander, 12011 BORGO SAN DALMAZZO (CN) (IT)
(74) Representative: Studio Torta S.p.A.

(57) **Abstract**

A vehicle wheel (1) extends along an axis (2) and has a rim (3) with an outer annular wall (7) radially defined by an inner face (8) and by an outer face (9), opposite each other; a tyre (4) delimits, together with the inner face (8), a chamber (5) which is filled with air and can be pressurised; a pressure monitoring device (20) is provided to detect and transmit data related to the pressure in the chamber (5); the pressure monitoring device (20) has a casing (21) fixed with respect to the rim (3), a pressure sensor (24) having a surface (26) on which the air pressure of the chamber (5) acts, an antenna (36), and a battery (38) housed in a compartment (39) of the casing (21); the latter is arranged on the outside of the chamber (5), whereas the outer annular wall (7) has a seat (28) which houses at least partially the pressure sensor (24) and communicates with the chamber (5).

## Description

### Cross-reference to related applications

This patent application claims priority from Italian patent application no. 102025000005138, filed on March 13, 2025, the entire disclosure of which is incorporated herein by reference.

### Technical field

The present invention relates to a vehicle wheel provided with a pressure sensor to check and/or monitor the air pressure values inside its tyre.

### Context

In the automotive field, in both the automobile segment and in the goods transport segment, it is now commonplace to install, on the wheels, pressure monitoring devices, indicated with the acronym TPMS (Tyre Pressure Monitoring System).

Typically, these devices have a pressure sensor and a data transmission system, in order to send information on the detected pressure values, in wireless mode, to an electronic control unit and/or to an instrument panel on the vehicle. Furthermore, the TPMS has a battery to supply electricity to the data transmission system. The batteries must be replaced periodically, based on the duration of their charge, which is typically 2-3 years. Generally speaking, this replacement is performed together with other maintenance operations, where the tyre mounted on the wheel rim is replaced.

In several known solutions, the TPMS is installed inside the air chamber where the pressure is detected. In others, it is installed at the common inflation valve, which is carried by the rim; for example, the TPMS is connected pneumatically to the inflation valve by means of a T-connector, so as not to influence inflation of the air chamber.

The known solutions of the two types, just described, are widely used, but nonetheless have drawbacks.

In the case of mounting inside the air chamber, the battery of the TPMS must sometimes be replaced before intervening with a replacement of the tyre. In these cases, it is necessary to plan and perform a dedicated maintenance operation, which requires detachment of the tyre in the workshop and produces additional maintenance times and costs, as well as possible inconveniences due to vehicle downtime.

In the case of mounting at the inflation valve (with or without a pneumatic T-connection), there are generally not difficulties for replacement of the battery, since the TMPS is accessible from the outside. However, the known solutions of this type are relatively cumbersome, so they cannot be used in cases where the wheel hub has a relatively high diameter, close to the inner diameter of the tyre, so the radial space available at the rim is not sufficient to install the TPMS.

These drawbacks are particularly evident in the wheels for a particular category of vehicles, which are usually indicated with the acronym SPMT (Self-Propelled Modular Transporter), i.e. remote-controlled autonomous vehicles, formed of several transport modules which are each equipped with a plurality of axles and are assembled together so as to form one or more rows, in order to be able to transport exceptional loads with a weight that can range from several hundred tons to tens of thousands of tons.

Use of SPMT is generally at construction sites and is of the intermittent type. In other words, the SPMT are only assembled and used extemporaneously, i.e. when it is actually necessary to move a load. In particular, the time needed to assemble, configure and check the transport modules is relatively high (in the order of one or several weeks), whereas actual movement of the load takes just a few hours. In the preliminary phases of assembly of the vehicle, a part of the time is spent checking the correct pressure of the wheels, the number of which is extremely high.

In this situation, it is necessary to consider that, due to the high loads to be supported, the tyres are inflated at higher pressures than the standard ones, for example pressures close to 25 bar. Considering the size of the load that each wheel must support, ruptures could occur extremely rapidly if the tyre is not correctly inflated, due to the considerable deformation of the carcass under load in the tyre. Possible bursting of a tyre, in the transport conditions described above, would have disastrous consequences. It is clear that pressure monitoring using a TMPS would be a highly advantageous factor in these applications.

Insofar as concerns the known solutions of TPMS to be mounted inside the air chamber, it is necessary to consider that SPMT have a relatively low mileage, even after several years, due to their extemporaneous use. For example, the tyres are replaced after ten years or more (if there are no intervening problems associated with punctures or ruptures). The battery of the TPMS, on the other hand, has a lower duration, so the replacement thereof would once again require a dedicated maintenance operation, with detachment of the tyre, as explained above. If the high number of wheels on which it is necessary to intervene for each transport module is also considered, it is clear that this solution is extremely disadvantageous in terms of the maintenance times and costs.

In any case, for TPMS solutions that are coupled to, or integrated with, the inflation valve, it is necessary to consider that the high load per axle, together with high driving torques, leads to an increase in the diameter of the wheel hubs, such as to leave space in the radial direction, relative to the rim, only for the inflation valve and for the bolts that lock the wheel onto the hub. It would therefore be difficult to integrate the TPMS into the inflation valve, since the limited spaces available in the radial direction would not be sufficient to easily house the TPMS itself, without it impeding access to such bolts when it is necessary to mount/remove the wheel.

In light of what is stated above, there is a need to adopt measures that allow the TPMS to be installed in a position independent from the inflation valve, in a relatively limited space and with a battery that can, when necessary, be easily replaced.

The object of the invention is therefore to satisfy the need indicated here above, preferably in a simple and/or efficient and/or economical way.

### Contents

The aforesaid object is achieved by a vehicle wheel as defined in claim 1.

The dependent claims define particular embodiments of the invention.

### Brief description of the drawings

For a better understanding of the present invention, preferred embodiments will be described below, by way of non-limiting example, with reference to the appended drawings, in which:
- Figure 1 shows, in perspective, a preferred embodiment of the vehicle wheel according to the dictates of the present invention;
- Figure 2 is an enlargement of a detail of Figure 1;
- Figure 3 is a cross-section of the vehicle wheel of Figure 1;
- Figure 4 relates to an enlarged detail of Figure 3, with parts shown schematically.

### Description of preferred embodiments

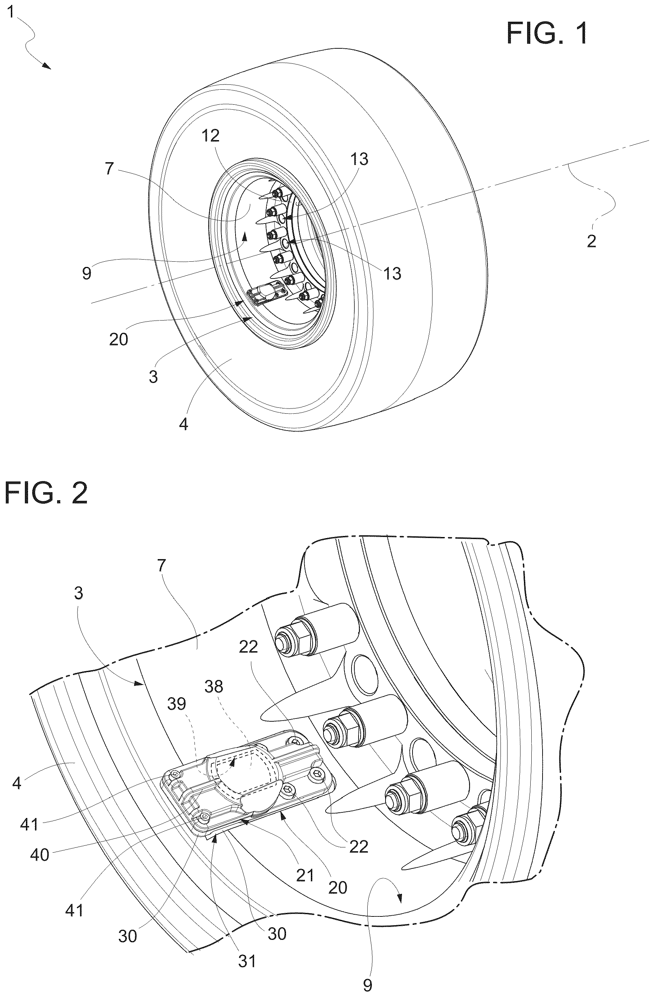

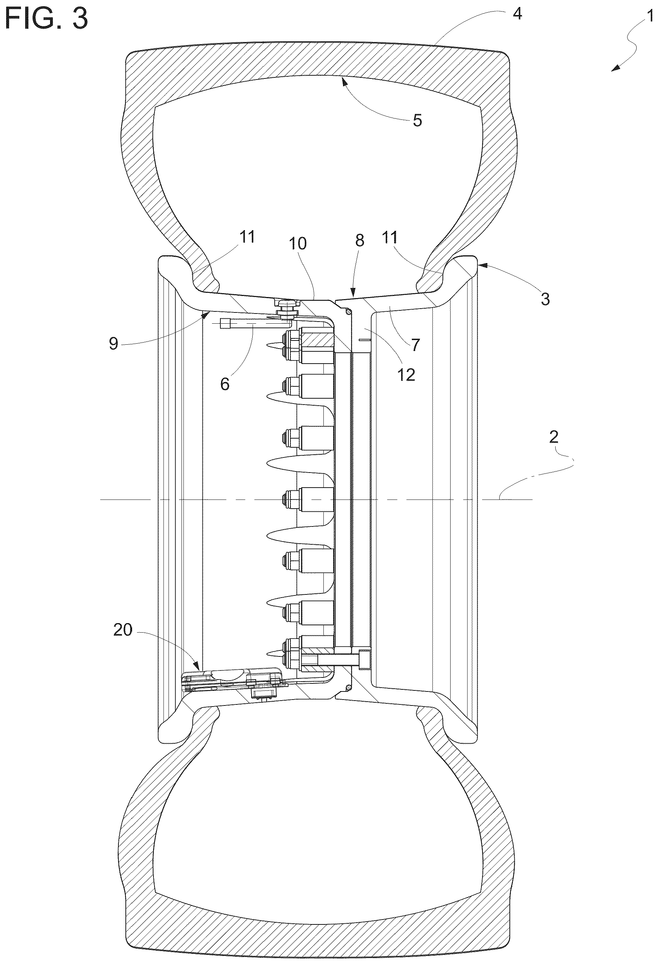

In Figures 1 and 3, reference number 1 indicates a vehicle wheel. The wheel 1 has an axis 2, coinciding, during use, with the rotation axis thereof, and comprises a rim 3 and a tyre 4, fitted onto the rim 3 so as to define, together with the latter, an inner chamber 5 (Figure 3), which is full of air and can be pressurised from the outside through an inflation valve 6. The valve 6 is of the known type, so it is not described in detail, and is carried in relative fixed position by the rim 3. In the particular shown example, the rim 3 is formed of two pieces connected to one another by means of bolts, but the present invention also applies to solutions in a single piece.

Once again with reference to Figure 3, the rim 3 has an outer annular wall 7, defined radially by an outer face 8 and by an inner face 9, opposite each other: the face 8 delimits the chamber 5, whereas the face 9 is facing radially towards the axis 2. In particular, the face 8 is shaped so as to comprise an intermediate portion 10 and two shoulders 11 arranged at the opposite axial ends of the rim 3. The shoulders 11 project radially outwards relative to the intermediate portion 10 and are connected to it so as to couple, fluid-tightly, the beads of the tyre 4, according to configurations and techniques that are known and not described in detail.

The rim 3 further comprises an attachment portion 12, provided with a plurality of through holes 13 (Figure 1) to fix the wheel 1 to a hub (not shown) by means of respective bolts and defined, in the particular shown case, by an annular flange that projects radially towards the axis 2 starting from the face 9.

The wheel 1 further comprises a device 20 for monitoring the air pressure in the chamber 5. With reference to Figure 2, the device 20 comprises a casing 21 fixed to the rim 3, for example by means of a plurality of screws 22 screwed into threaded blind holes (not shown) made in the wall 7. The device 20 is arranged in a position spaced apart from the valve 6, so it is independent therefrom.

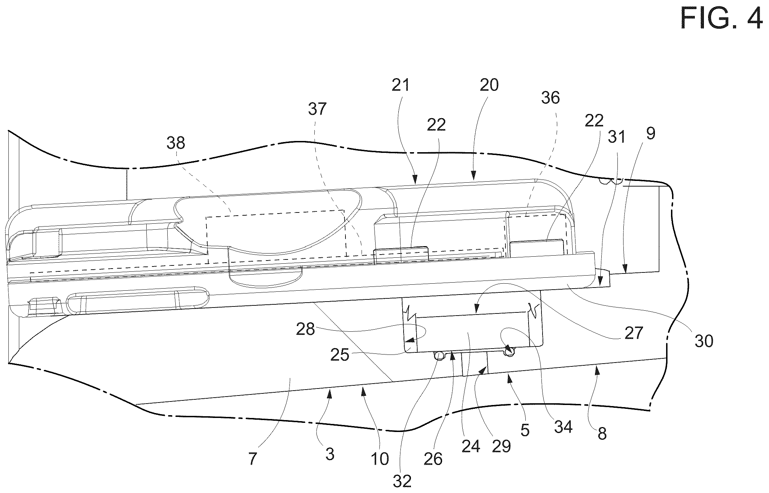

As shown in Figure 4 in a simplified and schematic way, the device 20 comprises a pressure sensor 24 carried in fixed position by a portion 25 of the casing 21 and having a surface 26, that is external to the casing 21 and on which a pressure detectable by the sensor 24 acts. In particular, the sensor 24 is the differential type, i.e. it has a surface 27 opposite to the surface 26, inside the casing 21, and is configured so as to detect a difference in pressure between the surfaces 26 and 27.

According to an aspect of the present invention, the surface 26 of the sensor 24 is arranged in a seat 28 which is made in the wall 7 and communicates permanently with the chamber 5 through a passage 29. The passage 29 is spaced apart and independent from the valve 6, and is connected pneumatically to the valve 6 exclusively through the chamber 5. In detail, the passage 29 has an inlet arranged at the face 8 (in particular at the intermediate portion 10) and an outlet that leads into the seat 28. Preferably, the passage 29 is defined by a radial hole having a lower diameter than the one of the seat 28.

Therefore, at least a part of the sensor 24 is housed in the seat 28.

In particular, the portion 25 projects into the seat 28 relative to a base wall 30 of the casing 21 which is arranged radially resting against the wall 7. In particular, in the preferred shown example, the base wall 30 is at least partly housed in a recess 31 extending radially starting from the face 9 in the wall 7, so the seat 28 leads into the recess 31.

Preferably, the sensor 24 is completely housed in the seat 28.

The sensor 24 and/or the portion 25 of the casing 21 are coupled to the wall 7 so as to guarantee sealing around the outlet of the passage 29, for example by means of a gasket ring 32, in order to avoid air leakages from the chamber 5 to the external atmosphere through the passage 29 and the seat 28. In particular, the gasket ring 32 is arranged in the seat 28 and, more in particular, is tightened radially (relative to the axis 2) between the surface 26 and a shoulder 33 that defines the exit edge of the passage 29. In particular, the gasket ring 32 is housed in an annular recess 34 at the shoulder 33.

As shown in Figure 4 in a schematic and simplified manner, the casing 21 of the device 20 has an inner compartment which houses:
- an antenna 36 for transmitting data in wireless mode,
- a printed circuit board 37 that is electrically connected to the sensor 24 and to the antenna 36, in a manner not shown, and is configured so as to receive signals emitted by the sensor 24, to process those signals and to transmit data through the antenna 36 in order to communicate information on the pressure detected by the sensor 24, for example towards an instrument panel (not shown) managed by an operator, and
- a battery 38 to supply electricity to the circuit board 37 and/or to the antenna 36.

In particular, with reference to Figure 2, the battery 38 is housed in a compartment 39 and is accessible by opening a flap or lid 40 that forms part of the casing 21 and is arranged, preferably, in a radially opposite position relative to the base wall 30. Therefore, the lid 40 is movable between at least two positions, relative to the base wall 30, so as to open and close the compartment 39: the battery 38 is installed so as to be accessible manually and to be able to be replaced after opening the compartment 39.

When the compartment 39 is closed, the inner compartment of the casing 21 is made watertight by sealing systems, not shown. Preferably, in order to keep the lid 40 closed, one or more screws 41 are provided, screwed into threaded blind holes (not shown) on the base wall 30.

Based on the configuration shown in Figure 4, it is clear that the sensor 24 is at least partly integrated into the wall 7, thanks to the housing in the seat 28, so the radial overall dimensions of the device 20, starting from the face 9 inwards, are relatively limited. These overall dimensions are then further reduced by the presence of the recess 31.

This reduction in the radial overall dimensions, together with the fact of having a solution independent from the valve 6, allows the device 20 to be installed in a relatively limited space, which does not compromise the operations of mounting and removal of the wheel 1 on the hub, i.e. it does not interfere either with the bolts that cross the holes 13, or with the space required by the tools necessary to tighten and loosen those bolts.

In particular, the casing 21 is designed and manufactured so as to be flat in a radial direction, in order to allow it to be easily arranged in the space that is available radially between the face 9 and the hub.

At the same time, it is possible easily to access the device 20, since the casing 21 is arranged at the face 9 of the rim 3, and not inside the chamber 5.

By guaranteeing this accessibility from the outside, it is possible to open and close the compartment 39, by means of the lid 40, in order to replace the battery 38; and/or it is possible to access the screws 22 in order to decouple the casing 21 from the rim 3, in order to replace the entire device 20 and/or the gasket ring 32 in the case of a malfunction.

Furthermore, the proposed solution is relatively simple, since it requires a relatively limited number of processes on the rim 3 to obtain the seat 28, the passage 29, the possible recess 31 and the possible threaded holes for the screws 22.

On the other hand, the proposed solution allows a saving with respect to the known solutions, where the pressure monitoring device is arranged inside the air chamber, insofar as concerns the times and costs that are necessary for the battery replacement operations, and that increase proportionally to the number of wheels of the vehicle on which maintenance is to be performed. In this regard, it is clear that the configuration of the present invention is applied in a particularly advantageous way to SPMT vehicles, which have an extremely high number of wheels.

In conclusion, it is clear that changes and variants can be made to the wheel 1 according to the present invention without thus deviating from the scope of protection as defined by the appended claims.

In particular, the dimensions, the proportions and the orientation of the seat 28 and the passage 29 could be different from what is illustrated by way of example.

Furthermore, the casing 21 could be devoid of a movable flap (and therefore the compartment 39, with the battery 38 inside it, could be permanently closed) : in this case, the device 20 could be provided with a charging system, for example an induction one, to charge the battery 38 without having to replace it, or the device 20 could be replaced in its entirely when the charge of its battery 38 is depleted.

Furthermore, the casing 21 could be fixed to the rim 3 by means of a connection system different from the screws 22 (for example by gluing) ; and/or the sealing in the seat 28 could be guaranteed by elements different from the gasket ring 32 (for example, by means of a sealing filler material between the portion 25 of the casing 21 and the lateral surface of the seat 28); and/or the antenna 35 could be arranged on an outer surface of the casing 21, rather than being inside the latter; and/or the pressure sensor 24 could be separate from the casing 21 (i.e. be supported directly by the wall 7) and be connected to the latter via a cable, in order to transmit the signals of the carried out detections.

## Claims

1. Vehicle wheel (1) extending along an axis (2) and comprising:
- a rim (3) comprising an outer annular wall (7), which carries an inflation valve (6) and is radially defined by an inner face (8) and by an outer face (9), opposite each other,
- a tyre (4) delimiting, together with said inner face (8), a chamber (5) which is filled with air and can be pressurised;
- a pressure monitoring device (20) to detect and transmit data related to the pressure in said chamber (5);
wherein said pressure monitoring device (20) comprises:
- a pressure sensor (24) having a surface (26) suitable to detect a quantity indicative of the air pressure in said chamber (5) ;
- an antenna (36) to transmit pressure data related to the measured quantity;
- a casing (21) which is fixed with respect to said rim (3);
- a battery (38) housed in a compartment (39) of said casing (21) ;
**characterised in that** said casing (21) is arranged on the outside of said chamber (5), and said outer annular wall (7) has a seat (28) which houses at least said surface (26) and communicates pneumatically with said chamber (5).

2. The vehicle wheel according to claim 1, wherein said seat (28) communicates with said chamber (5) through a passage (29) which is formed in said outer annular wall (7) and extends starting from said inner face (8).

3. The vehicle wheel according to claim 2, wherein said passage (29) has a diameter smaller than the one of said seat (28).

4. The vehicle wheel according to any one of the preceding claims, wherein said casing (21) radially rests on, and is fixed to, said outer annular wall (7).

5. The vehicle wheel according to claim 4, wherein said outer face (9) has a radial recess (31) partially housing said casing (21).

6. The vehicle wheel according to claim 5, wherein said seat (28) extends radially starting from said recess (31).

7. The vehicle wheel according to any one of the preceding claims, wherein said pressure sensor (24) is entirely housed in said seat (28).

8. The vehicle wheel according to any one of the preceding claims, wherein said casing (21) comprises a lid or flap (40) which is movable for opening and closing said compartment (39).

9. The vehicle wheel according to any one of the preceding claims, wherein said seat (28) houses a sealing device arranged so as to prevent air leakages from said chamber (5) to the external atmosphere through said passage (29) and said seat (28) .

10. The vehicle wheel according to claim 9, wherein said sealing device comprises a gasket ring (32) arranged radially between said surface (26) and a shoulder of said outer annular wall (7).

11. The vehicle wheel according to any one of the preceding claims, wherein said pressure monitoring device (20) is spaced apart from said inflation valve (6).
